# EUROPEAN PATENT APPLICATION

(11) **EP 1 322 102 A1**
(43) Date of publication of application: **25.06.2003**
(21) Application number: 02027981.6
(22) Date of filing: 13.12.2002
(51) Int. Cl.: H04N 1/00, G06T 11/60, G03D 15/00

(54) **Digitally printing photographic images along with non customer image files**

(30) Priority: 22.12.2001 GB 0130817
(71) Applicant: EASTMAN KODAK COMPANY, Rochester, New York 14650 (US)
(72) Inventor: Grimsey, Andrew, Kodak Limited, Harrow, Middlesex HA1 4TY (GB)
(74) Representative: Freeman, Avi

(57) **Abstract**

The invention provides a photographic processing system and a method of processing customer image orders. The method comprises the step of selecting a picture package corresponding to a processed film. The picture package includes information on non-customer-film image files relating to the processed film and digitally printing images obtained by scanning the processed film to generate output format images. The method further comprises the step of automatically printing one or more of the non-customer-film image files to be included with the output format images. Preferably, the non-customer-film image files are printed on the same print medium (e.g. photosensitive paper) as the output format images.

## Description

### Field of the Invention

The present invention relates to image processing and in particular to an improved method of processing of customer image orders. The invention also relates to a photographic processing system and a computer program for controlling the system.

### Background of the Invention

In typical photofinishing operations a user (sometimes referred to as a customer), delivers an image order including one or more film rolls carrying corresponding exposed films, to a photofinishing laboratory to have the films chemically developed and output format images prepared, such as photographs or slides. The user might be an individual or a retail store.

On receipt of the orders at the photofinishing laboratory individual films are usually spliced together end-to-end to form a larger roll or batch roll which is easily handled by automated processing equipment. Following chemical processing of the roll to yield permanent images from the latent images on the films, each of the permanent images is scanned at high speed to obtain image characteristic data, such as colour and density. If photographs are being prepared, these characteristics are passed to an optical printer for exposure of the permanent images onto photosensitive paper. The characteristic data is used to adjust exposure conditions, such as exposure time, colour balance, and the like, of an image frame on the developed film. The exposed photosensitive paper is then chemically developed to yield the photographs.

In modern photofinishing operations, images may optionally also be scanned to provide an image signal corresponding to each image on the film. These image signals are usually stored on a medium such as a magnetic or optical disk and provided to the customer, or made available to the customer over the Internet, and may be used then or at a later time to provide a hardcopy output.

When processing of the batch roll and the corresponding exposed paper is complete, each individual film, which forms part of the batch roll, is cut from the roll into strips (for 35mm film) or reattached to a film cassette (for Advanced Photo System film). The exposed and developed photosensitive paper is cut to form individual photographs. The film, completed photographs and any other media (such as mounted slides or a disk bearing scanned images) are packaged at a finishing station and the order is then complete. Promotional and marketing information is often also included in the order for the customer together with the completed prints. The promotional and marketing material is usually inserted manually or semi-automatically into an envelope holding the completed prints, to be returned to the customer. The promotional and marketing material is generally high volume pre-produced material printed on paper.

It is known that in the foregoing type of photofinishing operation, the optical printer can be replaced with a digital printer. The digital printer is arranged to print the images directly from the scanned data, following enhancements or other manipulations to the scanned images. In other words, the step of optical exposure through the developed film onto material such as photosensitive paper is no longer required. Instead, a digital writer is used to transfer the scanned images from the developed film directly to the photosensitive paper.

### Problem to be solved by the Invention

As explained above, the promotional and marketing material inserted in the envelope provided to the customer with the output format images is usually added manually or semi-automatically. This adds time to the photofinishing process, which is undesirable. In addition it requires human operator intervention which adds cost to the process.

When assembling customer orders at photo finishing centres the promotional and marketing material to be included in the order must be arranged for convenient insertion into the order. This adds complexity to the assembly process and a lack of flexibility if last minute changes are required in the promotional and marketing material.

A method and system of photographic processing is required that overcomes these problems.

### Summary of the Invention

According to a first aspect of the present invention, there is provided a method of processing customer image orders, comprising the steps of selecting a picture package corresponding to a processed film. The picture package includes information on non-customer-film image files relating to the processed film and digitally printing images obtained by scanning the processed film to generate output format images. The method further comprises the step of automatically printing one or more of the non-customer-film image files to be included with the output format images.

Preferably, the non-customer-film image files are printed on the same print medium (e.g. photosensitive paper) as the output format images.

It is preferable that the step of automatically printing one or more of the non-customer-film image files comprises automatically retrieving the one or more non-customer-film image files from an associated memory.

A system operator may execute the step of selection of the picture package. In one example, a user interface is provided, the interface including a drop-down menu of optional picture packages to enable the operator to select, easily, a desired picture package.

The picture package may include, in addition to the information on non-customer-film image files, information relating to one or more of the desired number of sets of output format images, the desired size of the output format images, customer-requested ancillary products, packaging information, and quality standards.

Preferably, the method comprises the step of scanning a processed film to obtain digital images of images recorded on the film prior to the step of printing said images.

According to a second aspect of the present invention, there is provided a photographic processing system, comprising a digital printer for printing output format images from a film being processed. The system also has a memory storing a number of non-customer-film image files associated with one or more picture packages. A control unit is provided to control the printer such that on selection of a picture package associated with a film being processed, one or more of the non-customer-film image files are automatically retrieved from the associated memory and printed to be included with the output format images.

In one example, the control unit comprises a microprocessor having embedded code to execute the steps of the method according to the first aspect of the present invention.

Preferably, the control unit comprises a user interface to enable an operator to select a desired picture package to enable the non-customer-film image files to be retrieved automatically from the associated memory. Preferably, the user interface comprises a drop-down menu of picture packages and a user operable selection device to enable the user to select a desired picture package from said drop-down menu.

A further aspect of the present invention provides a computer program (optionally stored on a computer readable medium) having program code means for controlling the step in the method of the first aspect of the present invention of automatically printing one or more non-customer-film image files, when said program is run on a computer.

### Advantageous Effect of the Invention

The present invention provides a method and system of processing customer image orders in which any advertising or promotional material that it is desired to incorporate into the customer's final product is printed with customer-film image files. In other words, in contrast to conventional systems of assembly of customer orders, in the present invention, the advertising and marketing information is incorporated into the customer product automatically. This enables easier control of exactly what promotional and customer information is included in a customer order.

In addition since the selection of non-customer-film image files is done in accordance with a defined picture package, there is a greater deal of flexibility of provision of promotional material since no prior printing of the material is needed. Accordingly changes can be made at short notice in the promotional material provided. Customisation and personalization of the promotional information is also possible. For example, if a picture package is selected in dependence on the retailer from which the film arrived at the photofinishing centre, a non-customer-film image of the retailer's logo may be incorporated into the customer product. This is achieved by having an instruction in the picture package, which is recognised by the printing system so that the suitable image is retrieved and printed. The invention therefore provides advertising in the final product that is both convenient and simple to implement.

The need to provide a selection of promotional material at the photofinishing station is overcome since the material is printed with the digitally printed images obtained by scanning the processed film.

### Brief Description of the Drawings

Examples of the present invention will now be described in detail with reference to the accompanying drawings, in which:
Figure 1 shows a schematic representation of the process by which films are received by photofinishers and photographs returned to customers;
Figure 2 shows an example of a photographic processing system according to the present invention;
Figure 3 shows a flow diagram of the steps in conventional photofinishing;
Figure 4 shows a flow diagram of the steps in photofinishing according to the method of the present invention.

### Detailed Description of the Invention

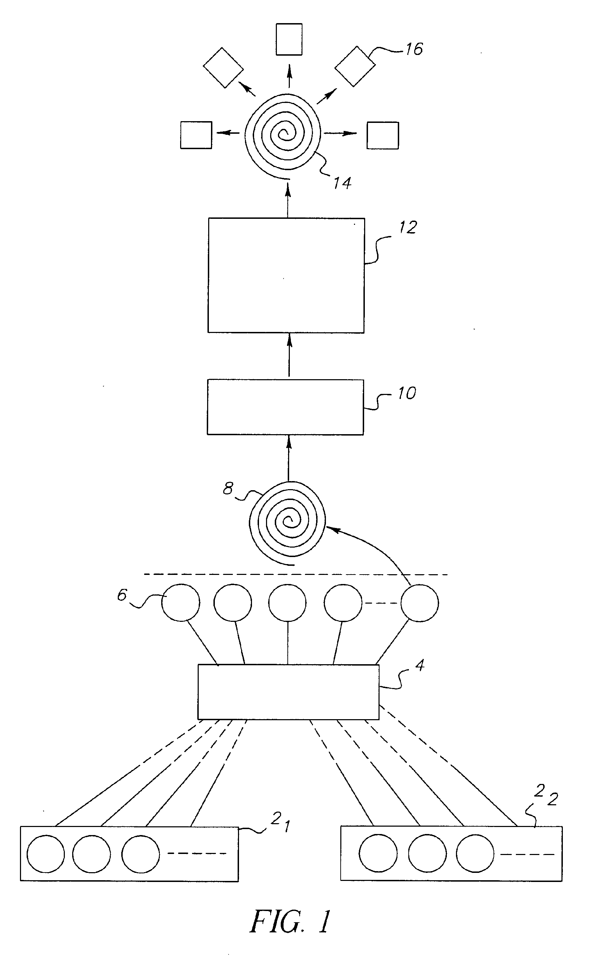

Figure 1 shows a schematic representation of the main steps in the process according to the present invention by which films are received by photofinishers and photographs returned to customers. Initially films are deposited at individual shops within dealerships 2₁, 2₂ etc. such as a chain of high street photography shops or high street chemists. The films are then transferred to a photofinishing laboratory 4, which serves to process the film and produce the photographs and any other desired output for the customer, to be returned to the customer as the customer product.

On receipt of the films at the photofinishing laboratory 4, the films are grouped together in batches 6 to facilitate quick processing and convenient arrangement of the output. For example, one batch may correspond to all films from which one set of standard size prints has been requested. Alternatively, one batch may include all films from which two sets of standard size prints and one photo CD have been requested. Any combination of output formats may be used in creating a batch. The films could also be batched in dependence on the dealer from which they were received i.e. all films from a common dealer may be arranged in a common batch.

Once the films have been batched, they are spliced together into batch rolls 8 ready for processing by processor 10, and twinchecked. Twinchecking is the process by which a unique number is associated with each film and order envelope in which the film was received. Although the film and order envelope are separated during the photofinishing process, twinchecking enables them to be rematched at the end of the process. An identification card is produced that identifies the particular roll and, as will be explained below, also enables an operator to select an appropriate picture package to go with the roll, when required. In addition, the batch rolls 8 may be notched. Notching is the process of identifying the presence of an image on a film and making a small mark e.g. a hole, at an edge of the film. This enables a scanner or printer to recognise and position an image on the film in the scanning or exposing area of a scanner or printer.

The picture package is a list of parameters relating to the batch roll 8 and the desired output from each of the films within the batch roll 8. For example, it may include the desired number of sets of prints, the desired size of the prints, the type of paper on which the prints are made, any desired ancillary products, final packaging information, quality standards and essentially, information on non-customer-film image files to include with the order. The non-customer-film image files may include one or more of index prints, promotional materials and customer information. The non-customer-film image files are typically advertisements which are to be included with the customer product.

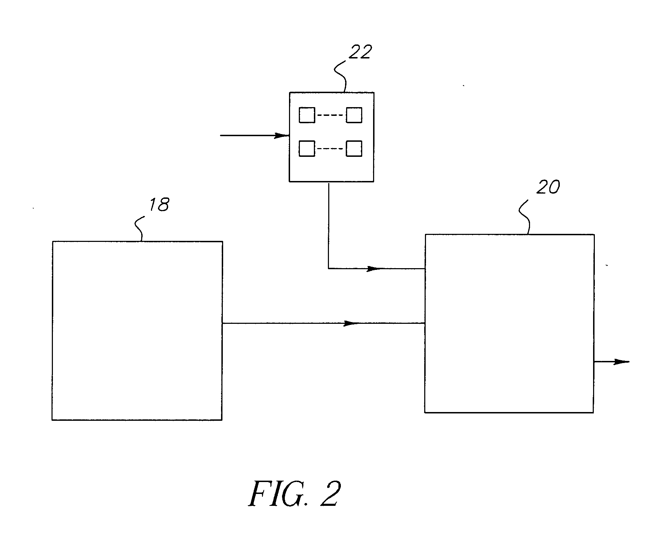

After processing by processor 10, the batch roll 8 of film is transferred to a printing system 12 for printing of the photographs on photographic paper prior to processing of the paper. The printing system 12 is described below with reference to Figure 2. A roll of paper 14 having the photographs corresponding to each of the images on a corresponding batch roll 8 of film is processed for each batch roll 8. The roll of processed paper 14 is transferred to finishing stations 16 for preparation e.g. cutting and assembly of the customer product. The preparation and assembly of the customer product involves the insertion of the photographs into an envelope for return to the customer. This stage has conventionally also involved the manual insertion of publicity or advertising material. As will be explained below, in accordance with the present invention, information relating to the batch roll from which an individual film comes is provided to the printing system 12 to enable the automatic in-line printing of publicity material, thereby rendering the manual insertion of such material unnecessary. This provides a saving in both time and cost.

In accordance with the method and system of the present invention, when a film is received from a dealership 2₁ it is put into a desired batch 6 to be processed as single batch roll 8. An identification card is produced for the roll 8 that serves to identify the roll 8 at all times during processing. When the batch roll has been developed and is transferred to the printing system 12, a corresponding picture package is assigned to the batch roll 8 from a number of possible picture packages. The assignment of a picture package may be achieved automatically or alternatively by manual operator selection. Where manual operator selection is used, an operator selects the picture package via a user interface optionally from a pull-down menu of possible picture packages on an associated computer display.

Figure 2 shows an example of a printing system 12 suitable for use in a photographic processing system according to the present invention. An example of a printing system suitable for use with the present invention is the Kodak I. Lab System Gen. 2. In the present invention, a computer (not shown) controls the system 12 and may also be used to control the processing of the film and paper. A computer program, optionally stored in the computer may be used to control the printing system 12 and the entire photoprocessing system. The computer program may also be stored on any suitable form of computer readable medium, such as, amongst others, CD-ROM, or a floppy disk. The printing system 12 comprises a scanning unit 18 arranged to scan the developed film and generate digital image files and a printing unit 20 to print the image files. A memory 22 is included for storing a number of digital images required by one or more picture packages.

When a batch roll 8 of film has been processed, the roll 8 is transferred to the printing system 12 as shown in Figure 1, where the photographs and any other desired output in the customer product is prepared. Information to identify the picture package corresponding to that batch roll of film is provided by an operator to a processor (not shown) associated with the printing system 12. The system is configured such that on identification of the picture package one or more additional non-customer-film image files are printed in-line by the printing unit 20 in addition to the printing of the customer-film images obtained by the scanner 18. In other words, the promotional information and any other desired images in dependence on the picture package are printed automatically in-line i.e. together with the images derived from the film. Therefore the requirement to assemble the envelope to be returned as the customer product is overcome since there need not necessarily be any additional material to include as it will all have been printed automatically. This offers a substantial time reduction in the preparation of the customer order.

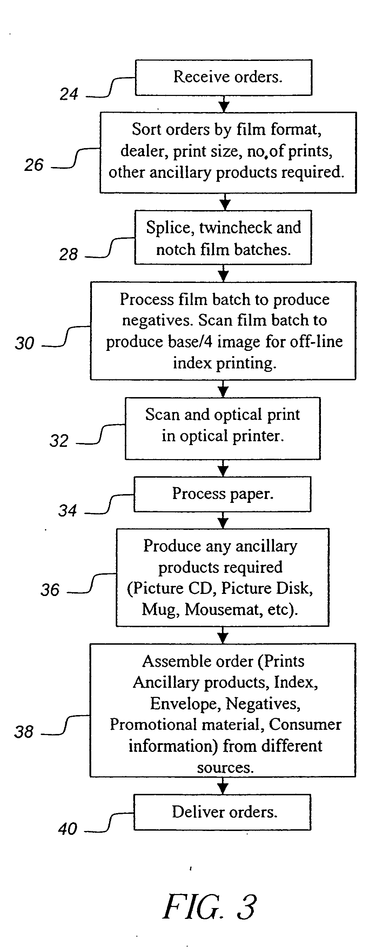

Figure 3 shows a flow diagram of the steps in conventional photofinishing, including the steps of processing the film and generating the final output format images such as photographs. In step 24, orders are received by the photofinishing centre. The orders are then sorted, in step 26, into batches for processing in dependence on certain film parameters such as film format or in dependence on customer-requested criteria such as number of sets of prints or requested size of prints. Additional parameters include amongst others whether or not any ancillary products have been requested such as a picture CD or a picture mouse mat.

Once the films have been sorted, at step 28 they are spliced, twinchecked and notched ready for processing. The process continues with step 30 in which the film is processed using conventional processing chemistry. The processing typically involves a development stage followed by a bleach and a fix stage. Finally the developed film is washed and dried ready for the preparation of the final output format of the process. In steps 32 the developed film is scanned at high speed to obtain image characteristics, such as colour and density. These characteristics are passed to an optical printer (step 34), which uses the characteristic data to adjust exposure conditions (such as exposure time, colour balance, and the like) of an image frame on the developed film which is optically projected onto a photographic material such as photosensitive paper. Next in step 36 any ancillary products required for a specific customer product are prepared prior to assembly in step 38. Finally in step 40, the customer product is delivered back to the customer. As explained above, the problem with this method is that if it is desired to include any additional promotional information, manual or semiautomatic intervention by an operator is required.

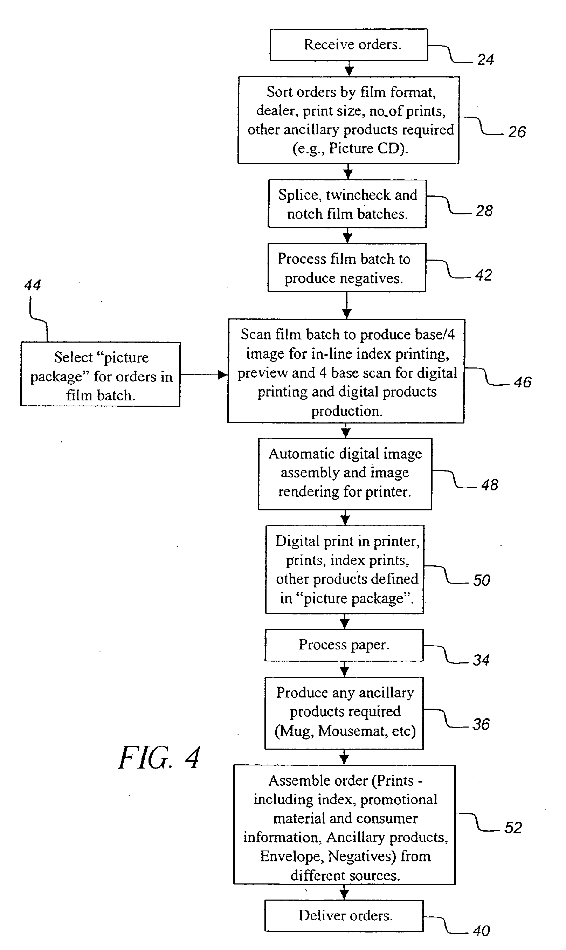

Figure 4 shows a flow diagram of the steps in photofinishing according to the method of the present invention. Steps in the method common to those in the method described with reference to Figure 3 are numbered identically. In the method according to the present invention, after the films have been spliced, twinchecked and notched they are chemically processed in step 42. After the processing in step 42, in step 44, a picture package for orders in the particular batch is selected. The picture package includes information such as the number of sets of prints to be made, the desired size of the prints, any ancillary products required with each order. Essentially, the picture package also includes information relating to any appropriate promotional or marketing images (or information) it is desired to include with the customer product. The picture package includes information relating to a number of digital images, which can come from one or more of many sources. For example, the images could be derived from the internet or from image files created specifically for that purpose.

As will be explained below, when the film is initially received by the photofinishing centre (4 in Figure 1) and spliced into a batch roll, each batch roll is assigned a code usually displayed on an accompanying identification card, which serves to identify the batch 6. This in turn enables a particular picture package to be selected for use with it when the batch roll 8 has been processed and the final output is printed.

The picture package can be defined as an order is received. For example, an operator could identify the components required for the customer product and include each of these in the picture package. In addition, the operator could identify the retailer from which a particular batch roll 8 originates and include in the picture package an indication that an image of the retailer's logo is to be printed after all the customer generated images on the film have printed. This selection of parameters would in combination define the picture package for this batch roll 8. Alternatively, the picture package could be selected from a database of pre-defined picture packages stored in a system memory of the printing system 12.

After the picture package has been defined and the film has been processed to produce film negatives, the film is scanned in step 46 to produce both a base/4 image for in-line index printing and also a 4-base scan for digital printing and digital products production. The selection of the picture package may be done entirely automatically or, as described above with reference to Figure 2, a user input may be required to select one particular picture package from, say, a pull-down menu on an associated user interface.

In step 48, with information of both the picture package and the digital image files obtained from the scanning in step 46, automatic digital image assembly and image rendering is performed for the printing. The image rendering includes manipulation and enhancement of digital scan information prior to the printing process, to provide image improvement and increased definition.

In step 50, the printer (20 in Figure 2) prints the customer-desired images i.e. the photographs from the film and also any other products defined in the identified picture package. The picture package is defined in dependence on the film batch. For example, if the batch of film is made up of a number of films, all of which come from a certain high street chemist shop, information on non-customer-film image files to include with the order such as advertisements for that chemist shop might be included in the picture package. Other examples of suitable image files for association with the picture package and in-line printing are images of an advertisement for other products for sale in the chemist shop. Information relating to any desired image may be included in the picture package. Information about how to improve the quality of photographs, such as instructions explaining how to avoid unwanted faults, may also be included.

The non-customer images to be printed may be obtained from one or more of many different sources. For example, the picture package may include an indication that a particular image from the Internet, perhaps identified by a URL address, is to be printed. In this case, the printing system 12 would require an internet connection. Alternatively, the additional images may be stored in the printing system memory 22, in which case the picture package would include such an indication together with a memory address for the additional digital file.

Following on from step 50, steps 34 and 36 are the same as the correspondingly numbered steps in the method described above with reference to Figure 3. In step 52 the order is assembled. In contrast to the customer product assembly step in the method of Figure 3, there is no manual intervention required to insert the promotional or marketing information. This is because all the necessary marketing information has been printed in-line in accordance with the selected picture package. Therefore this step is much faster than the corresponding step in Figure 3. Finally, in step 40 the customer product is delivered back to the customer.

## Claims

1. A method of processing customer image orders, comprising the steps of:
selecting a picture package corresponding to a processed film, the picture package including information on non-customer-film image files relating to the processed film;
digitally printing images obtained by scanning the processed film to generate output format images; and,
automatically printing one or more of the non-customer-film image files to be included with the output format images.

2. A method according to claim 1, in which the non-customer-film image files are printed on the same print medium as the output format images.

3. A method according to claim 2, in which the medium is photosensitive paper.

4. A method according to claim 1, in which the step of automatically printing one or more of the non-customer-film image files comprises automatically retrieving the one or more non-customer-film image files from an associated memory.

5. A method according to claim 1, in which the step of selection of the picture package is executed by a system operator.

6. A method according to claim 5, in which a user interface is provided, the interace including a drop-down menu of optional picture packages to enable the operator to select a desired picture package.

7. A method according to claim 1, in which the picture package comprises, in addition to the information on non-customer-film image files, information relating to one or more of the desired number of sets of output format images, the desired size of the output format images, customer-requested ancillary products, packaging information, and quality standards.

8. A method according to claim 1, comprising the step of scanning a processed film to obtain digital images of images recorded on the film prior to the step of printing said images.

9. A photographic processing system, comprising:
a digital printer for printing output format images from a film being processed;
a memory storing a number of non-customer-film image files in one or more picture packages; and,
a control unit to control the printer such that on selection of a picture package associated with a film being processed, one or more of the non-customer-film image files are automatically retrieved from the associated memory and printed to be included with the output format images.

10. A system according to claim 9, in which the control unit comprises a microprocessor having embedded code to execute the method steps of claim 1.

11. A system according to claim 9, in which the control unit comprises a user interface to enable an operator to select a desired picture package to enable the non-customer-film image files to be automatically retrieved from the associated memory.

12. A system according to claim 11, in which the user interface comprises a drop-down menu of picture packages and a user operable selection device to enable the user to select a desired picture package from said drop-down menu.

13. A computer program comprising program code means for controlling the step in claim 1 of automatically printing one or more non-customer-film image files, when said program is run on a computer.

14. A computer program comprising program code means stored on a computer readable medium for controlling the step in claim 1 of automatically printing one or more non-customer-film image files, when said program is run on a computer.
